# EUROPEAN PATENT APPLICATION

(11) **EP 4 800 286 A1**
(43) Date of publication of application: **02.09.2026**
(21) Application number: 26159352.9
(22) Date of filing: 18.02.2026
(51) Int. Cl.: F17C 3/08, F17C 13/06

(54) **APPARATUSES COMPRISING SEAL COMPONENTS AND METHODS COMPRISING SEAL COMPONENTSCHET**

(30) Priority: 27.02.2025 US 202563764480 P; 22.07.2025 US 202519277219
(71) Applicant: The Boeing Company, Arlington, VA 22202 (US)
(72) Inventor: HASAN, Jahid, Arlington, 22202 (US); KUTZMANN, Aaron Jonathan, Arlington, 22202 (US); SARTORIUS, Thomas Skyler, Arlington, 22202 (US)
(74) Representative: Sandri, Sandro

(57) **Abstract**

An apparatus comprises a first wall including a first orifice, a first seal component, a second wall including a second orifice, a second seal component, and an interstitial space between the first wall and the second wall. In a sealed configuration, the first seal component extends across the first orifice and the second seal component extends across the second orifice. In a vented configuration, the first seal component and second seal component do not extend across the respective orifices, a passage is defined between the first orifice and the second orifice, and an interior of the passage is fluidically isolated from the interstitial space. A method comprises rupturing a part of a first seal component of an apparatus, forming a passage between a first orifice and a second orifice to fluidically isolate an interior of the passage from an interstitial space, and rupturing a second seal component.

## Description

### RELATED APPLICATION

The present application is a non-provisional of and claims priority to U.S. Provisional Patent Application No. 63/764,480, filed on February 27, 2025, entitled "APPARATUSES COMPRSING SEAL COMPONENTS AND METHODS COMPRISING SEAL COMPONENTS,".

### FIELD

The present disclosure relates to apparatuses comprising seal components and methods comprising seal components.

### BACKGROUND

Insulated containers use pressure relief apparatuses when storing fluids that can build pressure within the container. Insulated containers frequently employ an inner wall and an outer wall separated by an insulating gap. Conventional pressure relief apparatuses physically connect the inner wall and the outer wall through the insulating gap, which also can be described as bridging the gap. Bridging the gap can prevent stored fluids such as gas and/or liquid from entering the gap. Fluid entering the gap can decrease the insulative properties of the container and potentially create hazardous mixing of the fluid and air. However, bridging the gap reduces the insulative properties of the region around conventional pressure relief apparatuses. Physical structures extending from the inner wall to the outer wall provide a pathway for conductive heat transfer between the inner wall to the outer wall. Furthermore, conventional pressure relief apparatuses frequently require additional insulation and create problems such as frost buildup. Therefore, there is a need for apparatuses that minimize heat transfer between the inner and outer walls and prevent fluid from entering the insulative gap between the walls.

### SUMMARY

Apparatuses comprising seal components and methods comprising seal components are disclosed. In some examples, an apparatus comprises a first wall, a first seal component, a second wall, and a second seal component. The first wall defines a first orifice. The second wall is arranged spaced away from the first wall and defines an interstitial space the first wall and the second wall. The second wall defines a second orifice aligned with the first orifice. The apparatus has a sealed configuration in which the first seal component extends across the first orifice and the second seal component extends across the second orifice. The apparatus has a vented configuration in which the first seal component does not extend across the first orifice, the second seal component does not extend across the second orifice, a passage is defined between the first orifice and the second orifice, and wherein an interior of the passage is fluidically isolated from the interstitial space.

In some examples, a method comprises rupturing a part of the first seal component of an apparatus. The apparatus comprises a first wall, the first seal component, a second wall, and a second seal component. The method further comprises forming the passage between the first orifice and the second orifice to fluidically isolate the interior of the passage from the interstitial space and rupturing the second seal component.

### BRIEF DESCRIPTION OF THE DRAWINGS

Fig. 1 is a schematic cross-sectional diagram representing an apparatus comprising a first seal component and a second seal component.
Fig. 2 is a schematic cross-sectional diagram representing a first example of the apparatus in a sealed configuration.
Fig. 3 is a schematic cross-sectional diagram representing the first example of the apparatus in a vented configuration.
Fig. 4 is a schematic cross-sectional diagram representing a second example of an apparatus in a sealed configuration.
Fig. 5 is a schematic cross-sectional diagram representing the second example of the apparatus in a vented configuration.
Fig. 6 is a schematic cross-sectional diagram representing a fuel tank with an example of the apparatus.
Fig. 7 is a perspective view of an example aircraft comprising a fuel tank with an example of the apparatus.
Fig. 8 is a flowchart schematically representing methods of rupturing a first seal component, forming a passage, and rupturing a second seal component.

### DESCRIPTION

Apparatuses comprising seal components and methods comprising seal components are disclosed. Generally, in the figures, elements that are likely to be included in a given example are illustrated in solid lines, while elements that are optional to a given example are illustrated in broken lines. However, elements that are illustrated in solid lines are not essential to all examples of the present disclosure, and an element shown in solid lines may be omitted from a particular example without departing from the scope of the present disclosure.

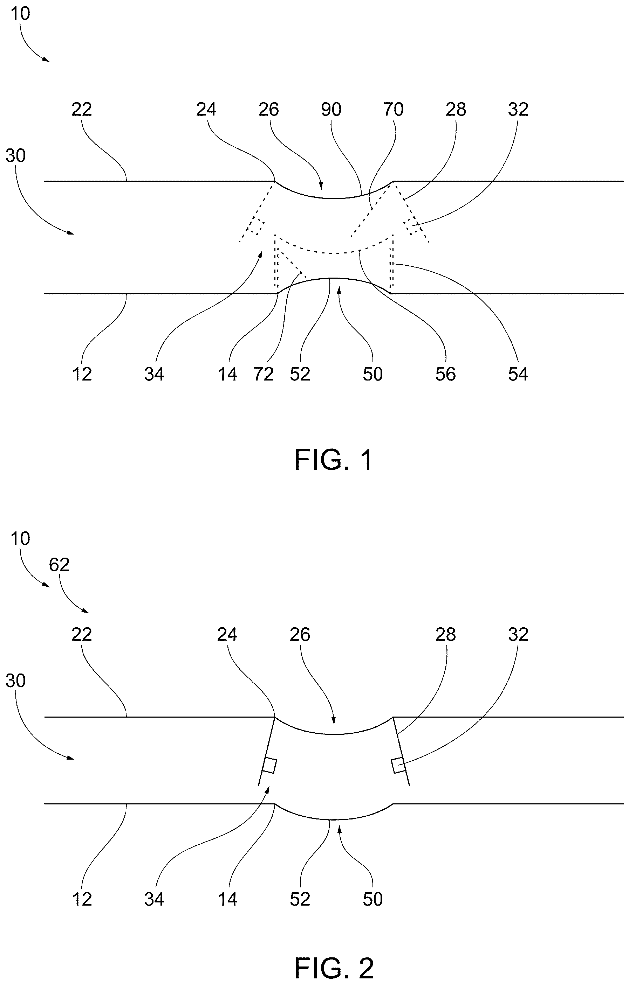

As schematically illustrated in Fig. 1, an apparatus 10 includes at least a first wall 12, a first seal component 50, a second wall 22, and a second seal component 26. First wall 12 defines a first orifice 14. Second wall 22 is arranged spaced away from first wall 12 which defines interstitial space 30 between first wall 12 and second wall 22. Second wall 22 defines a second orifice 24 aligned with first orifice 14.

Apparatus 10 has a sealed configuration 62 in which first seal component 50 extends across first orifice 14 and second seal component 26 extends across second orifice 24. Apparatus 10 has a vented configuration 64 in which first seal component 50 does not extend across first orifice 14 and second seal component 26 does not extend across second orifice 24. In vented configuration 64, a passage 40 is defined between first orifice 14 and second orifice 24 and an interior of passage 40 is fluidically isolated from interstitial space 30.

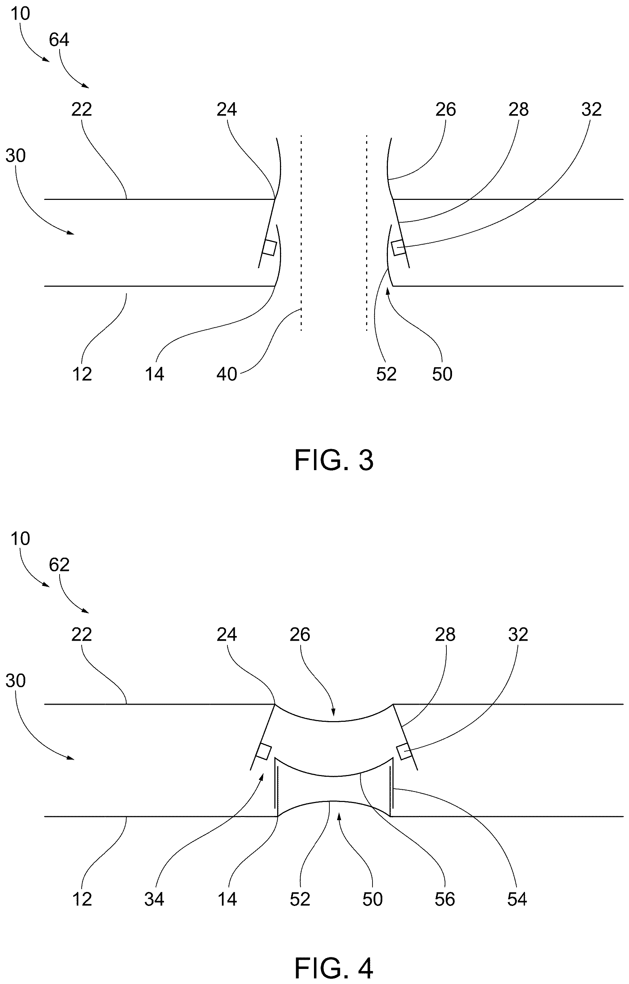

First seal component 50 seals first orifice 14 and second seal component 26 seals second orifice 24 when apparatus 10 is in sealed configuration 62. In vented configuration 64, at least part of first seal component 50 and second seal component 26 are broken and passage 40 is formed between first orifice 14 and second orifice 24. Examples of first seal component 50 comprise a first orifice seal 52 and examples of second seal component 26 comprise a second orifice seal 90. In one example to illustrate functionality, first seal component 50 and second seal component 26 comprise burst discs and first wall 12 is an interior wall of a pressure vessel. In a further example, first orifice seal 52 and second orifice seal 90 are configured as burst discs. In the example of a pressure vessel, first seal component 50 and second seal component 26 seal first orifice 14 and second orifice 24 when pressure is within normal operating conditions. When a maximum pressure is exceeded, first seal component 50 and second seal component 26 are ruptured and passage 40 is formed between first orifice 14 and second orifice 24 to prevent the contents of the pressure vessel from entering interstitial space 30. Fig. 2 depicts one example of apparatus 10 in sealed configuration 62 and Fig. 3 depicts the exemplary apparatus 10 in a vented configuration 64, including passage 40.

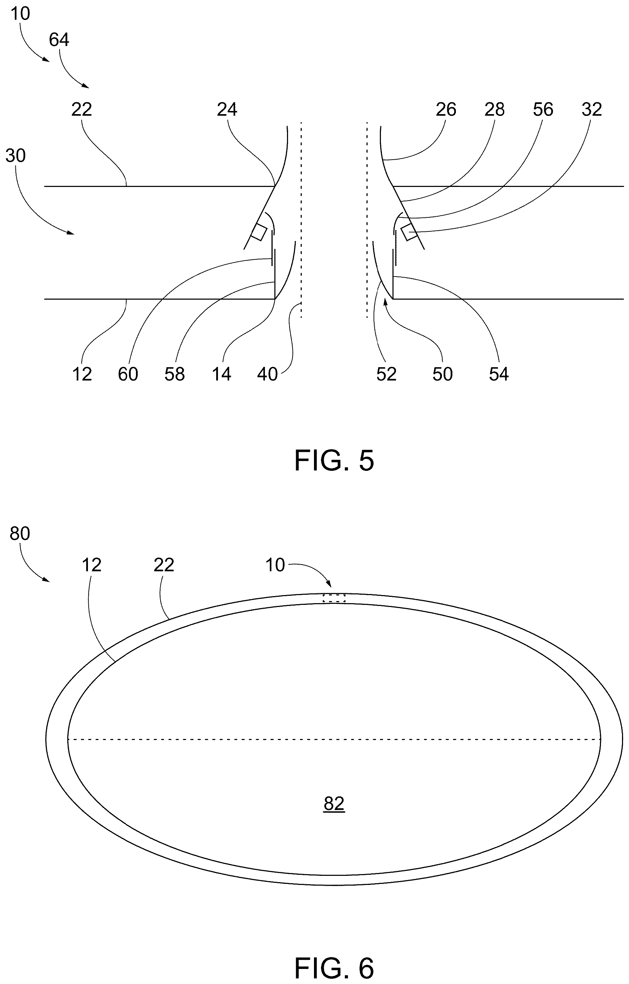

Figs. 1-5 depict examples of apparatuses 10 comprising a bridge portion 28. Examples of bridge portion 28 extend from second wall 22 toward first wall 12, as can be seen in Fig. 1. Further examples of bridge portion 28 are operatively coupled to second wall 22 and passage 40 is formed by bridge portion 28 and first seal component 50. Figs. 3 and 5 depict examples of bridge portion 28 and first seal component 50 forming passage 40. Further examples of bridge portion 28 surround second orifice 24 and form a cylinder around second orifice 24. Examples of bridge portion 28 are formed with second wall 22 and other examples of bridge portion 28 are formed separately from second wall 22 and inserted into second orifice 24.

Examples of bridge portion 28 extend toward first seal component 50 and provide an engagement surface for first seal component 50 to contact when transitioning from sealed configuration 62 to vented configuration 64. In other words, bridge portion 28 forms part of the bridge across interstitial space 30 in the vented configuration 64.

Bridge portion 28 and first seal component 50 form passage 40 in the vented configuration 64. As discussed above, a passage 40 is defined between first orifice 14 and second orifice 24 and an interior of passage 40 is fluidically isolated from interstitial space 30. In other words, first seal component 50 and bridge portion 28 form a barrier that reduces or prevents fluid within passage 40 from entering interstitial space 30.

Other examples of bridge portion 28 comprise structures for engaging first seal component 50. In one example, bridge portion 28 comprises a protrusion 32 which engages a portion of first seal component 50 in vented configuration 64. In another example, protrusion 32 is formed as an o-ring or teeth. Examples of protrusion 32 are arranged at an end of bridge portion 28 distal from second wall 22 and proximal to first seal component 50. Thus, when first seal component 50 ruptures and extends in a direction of second wall 22 and bridge portion 28, the first seal component 50 engages with the bridge portion 28 and protrusion 32. Examples of protrusion 32 extend in a circumference around bridge portion 28. Other examples of protrusion 32 extend around one or more portions of bridge portion 28.

First seal component 50 comprises first orifice seal 52 extending across first orifice 14 in sealed configuration 62. Thus, first orifice seal 52 seals first orifice 14 in the sealed configuration 62. In examples of vented configuration 64, first orifice seal 52 extends toward second wall 22 and does not extend across first orifice 14. In other words, first orifice seal 52 is ruptured in vented configuration 64.

In some examples, first orifice seal 52 is configured as a burst disc. Burst discs are comprised of metal or other materials. Burst discs are designed to rupture at a predetermined pressure. In some examples, the thickness and size of burst discs determines the rupture pressure. In other examples, discontinuities are added to the burst disc to control the rupture pressure. In still further examples, breaks are used to rupture burst discs at a predetermined point of deformation. In one example, a first orifice seal break 72 is configured to engage first orifice seal 52 when apparatus 10 is transitioning from sealed configuration 62 to vented configuration 64. In another example, first orifice seal break 72 forms an edge which contacts first orifice seal 52. In other words, first orifice seal break 72 punctures first orifice seal 52.

Examples of second seal component 26 and second orifice seal 90 comprise burst discs which extend across second orifice 24. Examples of second seal component 26 and second orifice seal 90 are similarly composed of metal or other materials. Other examples of second seal component 26 comprise discontinuities to determine a rupture pressure.

Examples of first seal component 50 and second seal component 26 are configured to rupture at different pressures. In one example, first seal component 50 is configured to rupture at a first pressure and second seal component 26 is configured to rupture at a second pressure. In such examples, the first pressure is greater than the second pressure. Second seal component 26 having a lower rupture pressure than first seal component 50 may prevent delay in relieving the excessive pressure within first wall 12. In other words, once first seal component 50 ruptures, the second seal component 26 is easily and quickly ruptured by the pressure.

First seal component 50 functions to seal first orifice 14 in sealed configuration 62 and form passage 40 in vented configuration 64. Specifically, a portion of first seal component 50 engages bridge portion 28 to form passage 40 in vented configuration 64. Sealed configurations 62 are depicted in Figs. 2 and 4 while vented configurations 64 are depicted in Figs. 3 and 5. In contrast to vented configuration 64, first seal component 50 and bridge portion 28 are not in direct contact in sealed configuration 62.

Furthermore, Figs. 1, 2, and 4 depict a gap 34 between first seal component 50 and bridge portion 28. More specifically, a gap 34 is defined in interstitial space 30 and between first orifice 14 and second orifice 24 such that physical structures are not present in gap 34. The lack of structures within gap 34 does not provide a path for conductive heat transfer through physical structures. Furthermore, in some examples of sealed configuration 62, a partial vacuum is formed in interstitial space 30 and gap 34. The presence of a partial vacuum further reduces heat transfer between first wall 12 and second wall 22. In other words, gap 34 provides a thermal break between first seal component 50 and bridge portion 28 similarly to interstitial space 30 providing a thermal break between first wall 12 and second wall 22. Described differently, in sealed configuration 62, there is no path for conductive heat transfer between first wall 12 and second wall 22 through interstitial space 30 between first orifice 14 and second orifice 24. Furthermore, in sealed configuration 62, there is no path for conductive heat transfer between first seal component 50 and bridge portion 28.

Turning now to Figs. 2-5, 7, and 8, illustrative non-exclusive examples of apparatuses 10 are illustrated. Where appropriate, the reference numerals from the schematic illustrations of Fig. 1 are used to designate corresponding parts of the examples of Figs. 2-5, 7, and 8 however, the examples of Figs. 2-5, 7, and 8 are non-exclusive and do not limit apparatuses 10 to the illustrated embodiments of Figs. 2-5, 7, and 8. That is, apparatuses 10 are not limited to the specific embodiments of Figs. 2-5, 7, and 8, and apparatuses 10 may incorporate any number of the various aspects, configurations, characteristics, properties, etc. of apparatuses 10 that are illustrated in and discussed with reference to the schematic representations of Fig. 1 and/or the embodiments of Figs. 2-5, 7, and 8, as well as variations thereof, without requiring the inclusion of all such aspects, configurations, characteristics, properties, etc. For the purpose of brevity, each previously discussed component, part, portion, aspect, region, etc. or variants thereof may not be discussed, illustrated, and/or labeled again with respect to the examples of Figs. 2-5, 7, and 8; however, it is within the scope of the present disclosure that the previously discussed features, variants, etc. may be utilized with the examples of Figs. 2-5, 7, and 8.

Examples of first seal component 50 vary in configuration. Figs. 2 and 3 depict an example of first seal component 50 wherein first orifice seal 52 engages bridge portion 28. Thus, first orifice seal 52 and bridge portion 28 are arranged and sized such that first orifice seal 52 engages bridge portion 28 in vented configuration 64. In other words, in vented configuration 64, first orifice seal 52 bridges interstitial space 30 to engage bridge portion 28. In this example, the size of first orifice seal 52 must be such that, when first orifice seal 52 is broken and extends in the direction of second wall 22, the first orifice seal 52 is long enough to engage bridge portion 28. Furthermore, bridge portion 28 must extend far enough in the direction of first wall 12 for first orifice seal 52 to be able to engage bridge portion 28.

In contrast to vented configuration 64, first orifice seal 52 does not engage bridge portion 28 in sealed configuration 62 of the example of Fig. 2. As described above, gap 34 is maintained between first orifice seal 52 and bridge portion 28 in sealed configuration 62, and gap 34 reduces heat transfer between first wall 12 and second wall 22 and between first seal component 50 and bridge portion 28.

Figs. 4 and 5 depict another configuration of first seal component 50. Figs. 4 and 5 depict an example of first seal component 50 which comprises a member 54 and a member seal 56. Member 54 is configured to translate toward second wall 22 when apparatus 10 is transitioning from sealed configuration 62 to vented configuration 64. In other words, member 54 is configured to translate toward bridge portion 28. The translation of member 54 occurs after first orifice seal 52 is ruptured. Once first orifice seal 52 ruptures, pressure urges member 54 to translate toward second wall 22.

Examples of member 54 are comprised of a first member component 58 attached to first wall 12 and a second member component 60 which translates along first member component 58. Translation of second member component 60 serves to bridge gap 34 between first seal component 50 and bridge portion 28. Examples of member 54 surround first orifice 14 or form a cylinder around first orifice 14.

Member seal 56 is configured to rupture at a maximum pressure. Member seal 56 may be configured as a burst disc similarly to first orifice seal 52 and second orifice seal 90. Examples of first orifice seal 52, member seal 56, and second seal component 26 are configured to rupture at different pressures. In one example, first orifice seal 52 is configured to rupture at a first pressure, second orifice seal 90 of second seal component 26 is configured to rupture at a second pressure, and member seal 56 is configured to rupture at a third pressure. In this example, the first pressure is greater than the third pressure. In a further example, the second pressure is less than the third pressure. Second orifice seal 90 of seal component 26 and member seal 56 having a lower rupture pressure than the first orifice seal 52 may prevent delay in relieving the excessive pressure within first wall 12 which causes first orifice seal 52 to rupture. In other words, the first pressure which ruptures first orifice seal 52 will quickly cascade through and rupture member seal 56 and second seal component 26.

Fig. 5 depicts bridge portion 28 operatively coupled to second wall 22 and, in vented configuration 64, member 54 and/or member seal 56 engages bridge portion 28 to form passage 40. As described above, passage 40 is defined between the first orifice 14 and the second orifice 24. An interior of passage 40 is fluidically isolated from interstitial space 30. In the example of Fig. 5, member 54, member seal 56, and bridge portion 28 form passage 40 which extends from first orifice 14 to second orifice 24. Furthermore, member 54, member seal 56, and bridge portion 28 fluidly isolate the interior of passage 40 from interstitial space 30. In other words, member 54, member seal 56, and bridge portion 28 form a barrier that reduces or prevents fluid within passage 40 from entering interstitial space 30. Fig. 5 further depicts member 54 and/or member seal 56 engaging protrusion 32 of bridge portion 28. Examples of protrusion 32 provide a contact surface for member 54 and/or member seal 56 to engage with and form the fluid isolation barrier.

Examples of apparatus 10 comprise a member seal break 70 configured to engage member seal 56 when apparatus 10 is transitioning from sealed configuration 62 to vented configuration 64. Examples of member seal break 70 form an edge which contacts member seal 56. As described above, breaks are used to rupture burst discs at a predetermined point of deformation.

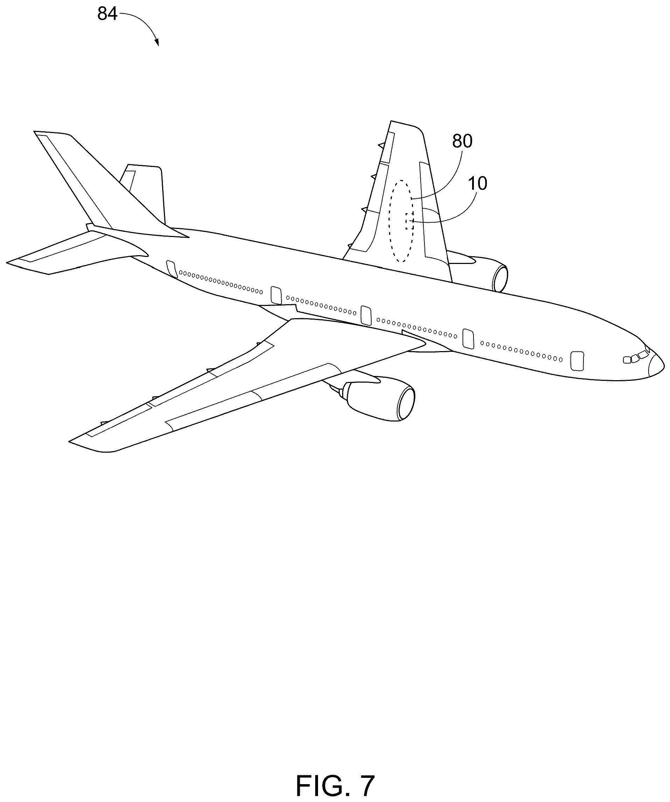

Examples of apparatus 10 are part systems and other apparatuses. In one example, first wall 12 and second wall 22 form part of a double walled insulated container with a partial vacuum formed between first wall 12 and second wall 22 in sealed configuration 62. Fig. 6 depicts a further example where first wall 12 and second wall 22 form at least a portion of a fuel tank 80, and wherein fuel tank 80 holds cryogenic fuel 82. Fig. 7 depicts an example of apparatus 10 forming part of fuel tank 80, and fuel tank 80 is arranged within an aircraft 84. Other examples of tank 80 are arranged with a spacecraft.

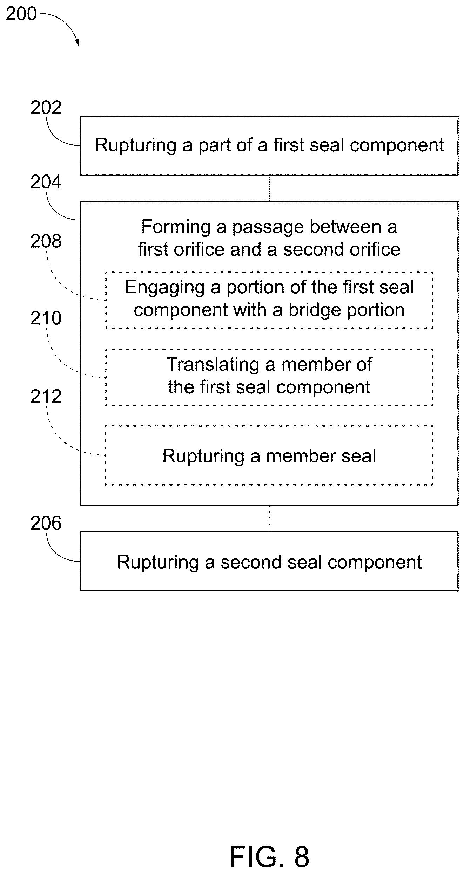

Fig. 8 schematically provides a flowchart that represents illustrative, non-exclusive examples of methods 200 according to the present disclosure. In Fig. 8, some steps are illustrated in dashed boxes indicating that such steps may be optional or may correspond to an optional version of a method according to the present disclosure. That said, not all methods according to the present disclosure are required to include the steps illustrated in solid boxes. The methods and steps illustrated in Fig. 8 are not limiting and other methods and steps are within the scope of the present disclosure, including methods having greater than or fewer than the number of steps illustrated, as understood from the discussions herein.

As seen in Fig. 8, method 200 comprises rupturing 202 a part of a first seal component 50 of an apparatus 10, forming 204 a passage 40 between a first orifice 14 and a second orifice 24 to fluidically isolate an interior of passage 40 from an interstitial space 30, and rupturing 206 a second seal component 26.

In some examples, rupturing 202 apart of first seal component 50 takes place at a first predetermined pressure and rupturing 206 second seal component 26 takes place at a second predetermined pressure. As discussed above, examples of first seal component 50 and second seal component 26 comprise burst discs. In some examples, the rupture pressure of first seal component 50 is greater than the rupture pressure of second seal component 26.

After rupturing 202 a part of first seal component 50, then passage 40 between first orifice 14 and second orifice 24 is formed 204. Examples of forming 204 passage 40 comprise part of first seal component 50 forming part of passage 40. In other examples, forming 204 passage 40 comprises engaging 208 a portion of first seal component 50 with bridge portion 28. As described above, examples of bridge portion 28 are operatively coupled to second wall 22 and extend in the direction of first wall 12 and first seal component 50. Furthermore, examples of forming 204 passage 40 comprise engaging 208 a portion of first seal component 50 with bridge portion 28 to form at least a partial seal which fluidically isolates interior of passage 40 from interstitial space 30. Examples of first seal component 50 engage protrusions 32 and of bridge portion 28, as depicted Figs. 3 and 5.

Examples of forming 204 passage 40 vary based on the configuration of first seal component 50. In one example, first orifice seal 52 engages bridge portion 28 to form passage 40. In other examples, forming passage 40 comprises translating 210 a member 54 of first seal component 50 toward second wall 22. Further examples, comprise rupturing 212 a member seal 56. In examples comprising member seal 56, member seal 56 and/or member 54 engaged the bridge portion 28 to form passage 40.

Illustrative, non-exclusive examples of inventive subject matter according to the present disclosure are described in the following enumerated paragraphs:
A. An apparatus (10) comprising:
   a first wall (12) defining a first orifice (14);
   a first seal component (50);
   a second wall (22) spaced away from the first wall (12) and defining an interstitial space (30) therebetween and defining a second orifice (24) aligned with the first orifice (14);
   a second seal component (26);
   wherein the apparatus (10) has:
      a sealed configuration (62) in which the first seal component (50) extends across the first orifice (14) and the second seal component (26) extends across the second orifice (24); and
      a vented configuration (64) in which the first seal component (50) does not extend across the first orifice (14), the second seal component (26) does not extend across the second orifice (24), in which a passage (40) is defined between the first orifice (14) and the second orifice (24), and wherein an interior of the passage (40) is fluidically isolated from the interstitial space (30).
A1. The apparatus (10) of paragraph A, further comprising a bridge portion (28) operatively coupled to the second wall (22), wherein the passage (40) is formed by the bridge portion (28) and the first seal component (50).
A2. The apparatus (10) of paragraph A1, wherein the bridge portion (28) extends from the second wall (22) toward the first wall (12).
A3. The apparatus (10) of any of paragraphs A1-A2, wherein the bridge portion (28) comprises a protrusion (32) which engages a portion of the first seal component (50) in the vented configuration (64).
A4. The apparatus (10) of paragraph A3, wherein the protrusion (32) is formed as an o-ring or teeth.
A5. The apparatus (10) of any of paragraphs A1-A4, wherein the bridge portion (28) and the first seal component (50) are not in direct contact in the sealed configuration (62).
A6. The apparatus (10) of any of paragraphs A1-A5, wherein, in the vented configuration (64), a portion of the first seal component (50) engages the bridge portion (28) to form the passage (40).
A7. The apparatus (10) of any of paragraphs A-A6, wherein the first seal component (50) comprises a first orifice seal (52) extending across the first orifice (14) in the sealed configuration (62).
A8. The apparatus (10) of paragraph A7, wherein, in the vented configuration (64), the first orifice seal (52) extends toward the second wall (22) and does not extend across the first orifice (14).
A9. The apparatus (10) of any of paragraphs A7-A8, further comprising a first orifice seal break (72) configured to engage the first orifice seal (52) when the apparatus (10) is transitioning from the sealed configuration (62) to the vented configuration (64).
A10. The apparatus (10) of paragraph A9, wherein the first orifice seal break (72) forms an edge which contacts the first orifice seal (52).
A11. The apparatus (10) of any of paragraphs A-A10, wherein the first seal component (50) is configured to rupture at a first pressure, wherein the second seal component (26) configured to rupture at a second pressure, and wherein the first pressure is greater than the second pressure.
A12. The apparatus (10) of any of paragraphs A1-A11, wherein a/the first orifice seal (52) is a/the portion of the first seal component (50) which engages the bridge portion (28).
A13. The apparatus (10) of any of paragraphs A-A11, wherein the first seal component (50) comprises a member (54) and a member seal (56), and wherein the member (54) is configured to translate toward the second wall (22) when the apparatus (10) is transitioning from the sealed configuration (62) to the vented configuration (64).
A14. The apparatus (10) of paragraph A13, wherein pressure urges the member (54) to translate toward the second wall (22).
A15. The apparatus (10) of any of paragraphs A13-A14, further comprising a/the bridge portion (28) operatively coupled to the second wall (22), and wherein, in the vented configuration (64), the member (54) or the member seal (56) engages the bridge portion (28) to form the passage (40).
A16. The apparatus (10) of any of paragraphs A13-A15, further comprising a member seal break (70) configured to engage the member seal (56) when the apparatus (10) is transitioning from the sealed configuration (62) to the vented configuration (64).
A17. The apparatus (10) of paragraph A16, wherein the member seal break (70) forms an edge which contacts the member seal (56).
A18. The apparatus (10) of any of paragraphs A13-A17 when depending from any of paragraphs A7-A11, wherein the first orifice seal (52) is configured to rupture at a/the first pressure, wherein the member seal (56) is configured to rupture at a third pressure, and wherein the first pressure is greater than the third pressure.
A19. The apparatus (10) of paragraph A18, wherein the second seal component (26) configured to rupture at a/the second pressure, and wherein the second pressure is less than the third pressure.
A20. The apparatus (10) of any of paragraphs A-A19, wherein, in the sealed configuration (62), a gap (34) is defined in the interstitial space (30) and between the first orifice (14) and the second orifice (24), and wherein physical structures are not present in the gap (34).
A21. The apparatus (10) of any of paragraphs A-A20, wherein, in the sealed configuration (62), there is no path for conduction heat transfer between the first wall (12) and the second wall (22) through the interstitial space (30) between the first orifice (14) and the second orifice (24).
A22. The apparatus (10) of any of paragraphs A-A21, wherein, in the sealed configuration (62), a partial vacuum is formed in the interstitial space (30).
A23. The apparatus (10) of any of paragraphs A-A22, wherein the first wall (12) and the second wall (22) form at least a portion of a fuel tank (80), and wherein the fuel tank (80) holds cryogenic fuel (82).
A24. The apparatus (10) of paragraph A23, wherein the fuel tank (80) is arranged within an aircraft (84) or spacecraft.
B. A method (200) comprising:
   rupturing (202) a part of the first seal component (50) of the apparatus (10) of any of paragraphs A-A24;
   forming (204) the passage (40) between the first orifice (14) and the second orifice (24) to fluidically isolate the interior of the passage (40) from the interstitial space (30); and rupturing (206) the second seal component (26).
B1. The method (200) of paragraph B, wherein the apparatus (10) further comprises a/the bridge portion (28) operatively coupled to the second wall (22), and wherein the forming the passage (40) comprises engaging (208) a portion of the first seal component (50) with the bridge portion (28).
B2. The method (200) of paragraph B1, wherein the engaging (208) the portion of the first seal component (50) and with the bridge portion (28) forms at least a partial seal which fluidically isolates the interior of the passage (40) from the interstitial space (30).
B3. The method (200) of any of paragraphs B-B2 as dependent from any of paragraphs A13-A18, wherein the forming (204) the passage (40) comprises translating (210) a/the member (54) of the first seal component (50) toward the second wall (22).
B4. The method (200) of paragraph B3, wherein the forming (204) the passage (40) comprises rupturing (212) a/the member seal (56).
C. The use of the apparatus (10) of any of paragraphs A-A24 to relieve pressure.

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

As used herein, the term "and/or" placed between a first entity and a second entity means one of (1) the first entity, (2) the second entity, and (3) the first entity and the second entity. Multiple entries listed with "and/or" should be construed in the same manner, i.e., "one or more" of the entities so conjoined. Other entities optionally may be present other than the entities specifically identified by the "and/or" clause, whether related or unrelated to those entities specifically identified. Thus, as a non-limiting example, a reference to "A and/or B," when used in conjunction with open-ended language such as "comprising," may refer, in one example, to A only (optionally including entities other than B); in another example, to B only (optionally including entities other than A); in yet another example, to both A and B (optionally including other entities). These entities may refer to elements, actions, structures, steps, operations, values, and the like.

The various disclosed elements of apparatuses and steps of methods disclosed herein are not required to all apparatuses and methods according to the present disclosure, and the present disclosure includes all novel and non-obvious combinations and subcombinations of the various elements and steps disclosed herein. Moreover, one or more of the various elements and steps disclosed herein may define independent inventive subject matter that is separate and apart from the whole of a disclosed apparatus or method. Accordingly, such inventive subject matter is not required to be associated with the specific apparatuses and methods that are expressly disclosed herein, and such inventive subject matter may find utility in apparatuses and/or methods that are not expressly disclosed herein.

## Claims

1. An apparatus (10) comprising:
a first wall (12) defining a first orifice (14);
a first seal component (50);
a second wall (22) spaced away from the first wall (12) and defining an interstitial space (30) therebetween and defining a second orifice (24) aligned with the first orifice (14);
a second seal component (26);
wherein the apparatus (10) has:
a sealed configuration (62) in which the first seal component (50) extends across the first orifice (14) and the second seal component (26) extends across the second orifice (24); and
a vented configuration (64) in which the first seal component (50) does not extend across the first orifice (14), the second seal component (26) does not extend across the second orifice (24), in which a passage (40) is defined between the first orifice (14) and the second orifice (24), and wherein an interior of the passage (40) is fluidically isolated from the interstitial space (30).

2. The apparatus (10) of claim 1, further comprising a bridge portion (28) operatively coupled to the second wall (22), wherein the passage (40) is formed by the bridge portion (28) and the first seal component (50).

3. The apparatus (10) of claim 2, wherein the bridge portion (28) extends from the second wall (22) toward the first wall (12).

4. The apparatus (10) of any one of claims 2-3, wherein the bridge portion (28) comprises a protrusion (32) which engages a portion of the first seal component (50) in the vented configuration (64).

5. The apparatus (10) of claim 1, wherein the passage (40) is formed by the bridge portion (28) and at least a portion of the first seal component (50).

6. The apparatus (10) of claim 5, wherein the first seal component (50) comprises a first orifice seal (52) extending across the first orifice (14) in the sealed configuration (62), and
wherein, in the vented configuration (64), the first orifice seal (52) extends toward the second wall (22) and does not extend across the first orifice (14).

7. The apparatus (10) of any one of claims 5-6, wherein the first seal component (50) is configured to rupture at a first pressure, wherein the second seal component (26) configured to rupture at a second pressure, and wherein the first pressure is greater than the second pressure.

8. The apparatus (10) of any one of claims 5-7, wherein the first seal component (50) comprises a member (54) and a member seal (56), and wherein the member (54) is configured to translate toward the second wall (22) when the apparatus (10) is transitioning from the sealed configuration (62) to the vented configuration (64).

9. The apparatus (10) of claim 8, wherein, in the vented configuration (64), the member (54) or the member seal (56) engages the bridge portion (28) to form the passage (40).

10. The apparatus (10) of any one of claims 8-9, wherein the first seal component (50) is configured to rupture at a first pressure, wherein the second seal component (26) configured to rupture at a second pressure, wherein the member seal (56) is configured to rupture at a third pressure, and wherein the first pressure is greater than the third pressure, and wherein the second pressure is less than the third pressure.

11. The apparatus (10) of claim 5, wherein, in the sealed configuration (62), a gap (34) is defined in the interstitial space (30) and between the first orifice (14) and the second orifice (24), and wherein physical structures are not present in the gap (34).

12. The apparatus (10) of claim 5, wherein, in the sealed configuration (62), there is no path for conductive heat transfer between the first wall (12) and the second wall (22) through the interstitial space (30) between the first orifice (14) and the second orifice (24).

13. The apparatus (10) of claim 5, wherein the first wall (12) and the second wall (22) form at least a portion of a double walled insulated fuel tank (80), wherein, in the sealed configuration (62), a partial vacuum is formed in the interstitial space (30), and wherein the fuel tank (80) is arranged within an aircraft (84) or spacecraft.

14. A method (200) comprising:
rupturing (202) a part of a first seal component (50) of an apparatus (10), wherein the apparatus (10) comprises a first wall (12) defining a first orifice (14), a second wall (22) spaced away from the first wall (12) and defining an interstitial space (30) therebetween and defining a second orifice (24) aligned with the first orifice (14), a bridge portion (28) operatively coupled to the second wall (22), and, in a sealed configuration (62), the first seal component (50) extending across the first orifice (14) and a second seal component (26) extending across the second orifice (24);
forming (204) a passage (40) between the first orifice (14) and the second orifice (24) to fluidically isolate an interior of the passage (40) from the interstitial space (30); and
rupturing (206) the second seal component (26).

15. The method (200) of claim 14, wherein the apparatus (10) further comprises the bridge portion (28) operatively coupled to the second wall (22), and wherein the forming (204) the passage (40) comprises engaging (208) a portion of the first seal component (50) with the bridge portion (28).
